# EUROPÄISCHE PATENTSCHRIFT

(11) **EP 1 360 084 B1**
(45) Veröffentlichungstag und Bekanntmachung des Hinweises auf die Patenterteilung: **30.08.2006**
(21) Anmeldenummer: 02718126.2
(22) Anmeldetag: 13.02.2002
(51) Int. Cl.: B60K 15/00

(54) **TANKSTELLE FÜR WASSERSTOFF**
FILLING STATION FOR HYDROGEN
POSTE DE RAVITAILLEMENT POUR HYDROGÈNE

(30) Priorität: 15.02.2001 DE 10107187
(43) Veröffentlichungstag der Anmeldung: 12.11.2003
(73) Patentinhaber: Linde Aktiengesellschaft, 65189 Wiesbaden (DE)
(72) Erfinder: TRILL, Rolf, 82031 Grünwald (DE); WOLF, Joachim, 81241 München (DE)
(74) Vertreter: Zahn, Christoph
(86) Internationale Anmeldenummer: PCT/EP2002/001501
(87) Internationale Veröffentlichungsnummer: WO 2002/064395

(56) Entgegenhaltungen:
- EP-A- 0 770 815
- US-A- 3 369 372
- US-A- 5 315 831
- US-A- 5 325 894
- US-A- 5 537 824

## Beschreibung

Die Erfindung betrifft eine Tankstelle für verflüssigten und gasförmigen, unter hohem Druck stehenden Wasserstoff.

Im Folgenden werden bei den Bezeichnungen des Wasserstoffes entsprechend seinem Aggregatzustand die Buchstaben "G" für "gasförmig" und "L" für "flüssig" bzw. "liquid" vorangestellt; also bspw. GH₂ bzw. LH₂ für gasförmigen bzw. flüssigen Wasserstoff.

Insbesondere Wasserstoff gewinnt gegenwärtig durch den steigenden Energiebedarf und das gestiegene Umweltbewusstsein als Energieträger zunehmend an Bedeutung. So sind erste Versuche im Gange, Flugzeuge, Lastkraftwagen, Busse sowie Personenkraftwagen mittels mit Wasserstoff-betriebener Turbinen bzw. Motoren anzutreiben. Des Weiteren befinden sich bereits Fahrzeuge im Feldversuch, bei denen mittels einer Brennstoffzelle elektrische Energie erzeugt wird, die wiederum einen E-Motor antreibt. Der für den Betrieb der Brennstoffzelle erforderliche Wasserstoff wird bei diesen Fahrzeugen entweder in flüssiger oder gasförmiger und komprimierter Form gespeichert.

Die Speicherung des Wasserstoffs "an Bord" der oben genannten Verkehrsmittel ist dabei in flüssiger Form am sinnvollsten. Hierzu muss der Wasserstoff -248.15°C (25K) abgekühlt und auf dieser Temperatur gehalten werden, was nur durch entsprechende Isoliermaßnahmen an den Speicherbehältern bzw. -tanks zu erreichen ist. Eine Speicherung in gasförmigem Zustand ist aufgrund der geringen Dichte von GH₂ in der Regel in den oben genannten Verkehrsmitteln ungünstiger, da die Speicherung hierbei in großvolumigen Speicherbehältern bei hohen Drücken erfolgen muss.

Die Kosten für den Energieträger Wasserstoff müssen im Hinblick auf die Akzeptanz des Wasserstoffes als Kraftstoff in der Größenordnung der aktuellen Kraftstoffkosten liegen. Gleiches gilt für die Gesamtkosten der Wasserstoff-Infrastruktur, also der Erzeugung des Wasserstoffes, seines Transportes sowie der erforderlichen Wasserstoff-Tankstellen.

Insbesondere im Hinblick auf die erforderliche Übergangszeit von den heutigen Kraftstoffen auf den Wasserstoff ist es erforderlich, dass die Wasserstoff-Tankstelle in eine bestehende konventionelle Tankstelle integrierbar ist. Sie muss deshalb einen vergleichsweise geringen Platzbedarf aufweisen und ohne ein zusätzliches Fachpersonal auskommen.

Da zur Zeit von den unterschiedlichen Kraftfahrzeugherstellern verschiedene Formen der Speicherung des Wasserstoffes an Bord der Kraftfahrzeuge untersucht werden bzw. mit ihnen experimentiert wird, ist es erforderlich, dass die Wasserstoff-Tankstelle - zumindest wiederum für eine Übergangszeit - sowohl tiefkalten verflüssigten als auch gasförmigen, unter Hochdruck stehenden Wasserstoff anbieten kann. Des Weiteren müssen Wasserstoff-Tankstellen so flexibel ausgelegt sein, dass sie auf die tageszeitlichen Schwankungen bei dem Wasserstoffbedarf reagieren können.

Aus der US-A 5,315,831 sowie der US-A 5,537,824 sind Tankstellen bekannt, mittels derer Erdgas-betriebene Fahrzeuge mit LNG und/oder CNG betankt werden können.

Gemäß der US-A-5 315 831 ist ein gleichzeitiges Betanken von Fahrzeugen mit LN6 oder CN6 möglich, dabei ist jedoch keine gleichzeitige Entnahme von flüssigem und gasförmigem Erdgas aus dem Flüssig-Erdgas-Speicherbehälter zum Betanken möglich.

Gemäß der US-A-5 537 824 ist kein gleichzeitiges Betanken von Fahrzeugen mit LN6 oder CN6 möglich. Die in diesem Dokument beschriebene Erdgastankstelle ist ausschließlich für die Betankung von Fahrzeugen mit LN6 gedacht. Gasförmiges Erdgas (CN6) dient dabei dazu den beiden Speicherbehältern einen höheren, gesättigten Druck aufzuerlegen. Dieses CN6 kann jedoch auch über eine CN6-Füllöffnung abgelassen werden. Das Dokument schweigt sich jedoch darüber aus, wohin das CN6 abgelassen wird.

Aufgabe der vorliegenden Erfindung ist es, eine gattungsgemäße Tankstelle für verflüssigten und gasförmigen, unter hohem Druck stehenden Wasserstoff anzugeben, die die vorgenannten Nachteile vermeidet bzw. die vorgenannten Bedingungen erfüllt.

Die erfindungsgemäße Tankstelle für verflüssigten und gasförmigen, unter hohem Druck stehenden Wasserstoff weist
a) wenigstens einen unterirdisch angeordneten Speicherbehälter, der für die Speicherung von verflüssigtem Wasserstoff geeignet ist,
b) wenigstens einen Hochdruck-Speicherbehälter, der für die Speicherung von gasförmigem Wasserstoff bei einem Druck zwischen 300 und 800 bar geeignet ist,
c) wenigstens eine erste Betankungseinrichtung, über die Fahrzeuge jeglicher Art mit flüssigem Wasserstoff betankt werden können und wenigstens eine zweite Betankungseinrichtung, über die gleichzeitig Fahrzeuge jeglicher Art mit gasförmigem, unter hohem Druck stehenden Wasserstoff kontinuierlich betankt werden können,
d) wenigstens einen Wärmetauscher, der der Verdampfung des aus dem unterirdisch angeordneten Speicherbehälter abgezogenen flüssigen Wasserstoffes dient,
e) wenigstens eine Pumpe, mittels derer der flüssige Wasserstoff aus dem unterirdisch angeordneten Speicherbehälter der oder zumindest einer der ersten Betankungseinrichtungen zugeführt wird,
f) wenigstens eine kryogene Druckerhöhungspumpe, mittels derer der flüssige Wasserstoff aus dem unterirdisch angeordneten Speicherbehälter dem Wärmetauscher und anschließend dem Hochdruck-Speicherbehälter, der mit der oder zumindest einer der zweiten Betankungseinrichtungen verbunden ist, zugeführt wird, und
g) eine, den unterirdisch angeordneten Speicherbehälter mit dem Hochdruck-Speicherbehälter und/oder mit der oder zumindest einer der zweiten Betankungseinrichtungen verbindende Boil-Off-Gas-Entnahmeleitung, wobei in dieser wenigstens ein Verdichter angeordnet ist, auf.

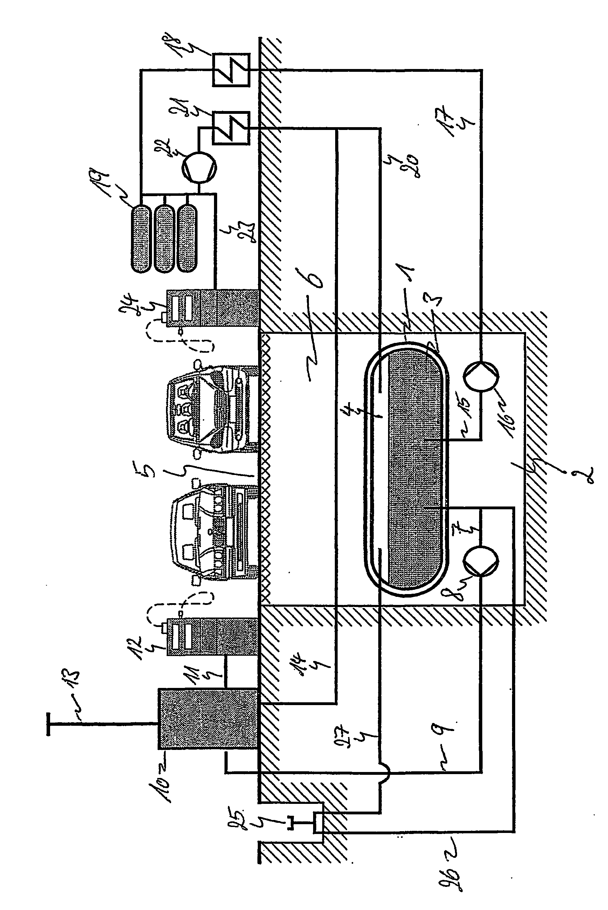

Die erfindungsgemäße Tankstelle sowie weitere Ausgestaltungen derselben seien anhand des in der Figur dargestellten Ausführungsbeispieles näher erläutert.

Die Figur zeigt eine Tankstelle, die der Abgabe von verflüssigtem und gasförmigem, unter hohen Druck stehenden Wasserstoff dient. Eine derartige Tankstelle weist einen oder mehrere Speicherbehälter 1 auf, in denen der verflüssigte Wasserstoff gespeichert werden kann. Derartige Speicherbehälter sind hierzu im Regelfall doppelwandig ausgeführt und weisen eine entsprechende (Super)isolation auf, um die Abdampfverluste so gering als möglich zu halten.

Aus Platzgründen sowie aus sicherheitstechnischen Überlegungen ist es sinnvoll, den oder die Speicherbehälter 1 unterirdisch anzuordnen.

Aus diesem Grund sind der oder die Speicherbehälter 1 - wie dies in der Figur dargestellt ist - in einem unterirdischen Tanklager 2 angeordnet. Dieses unterirdische Tanklager 2 besteht aus einer Wanne 6, in der der oder die Speicherbehälter 1 angeordnet werden, sowie einer die Wanne 6 nach oben verschließenden Abdeckung 5, die vorzugsweise befahrbar ausgebildet ist, so dass die zu betankenden Fahrzeuge diese Abdeckung 5 befahren können.

Wie in der Figur ebenfalls dargestellt, ist es zweckmäßig, die erforderlichen Pumpen 8 und 16 - auf die im Folgenden noch näher eingegangen werden wird - ebenfalls in dem unterirdischen Tanklager 2 anzuordnen. Hierbei kann es aus sicherheitstechnischen Gründen sinnvoll sein, dass das unterirdische Tanklager 2 in mehrere Räume aufgeteilt wird, wobei der oder die Speicherbehälter in einem oder mehreren separaten Räumen untergebracht sind, während die erwähnten Pumpen 8 und 16 ebenfalls in separaten Räumen angeordnet sind.

Die erfindungsgemäße Tankstelle für Wasserstoff weiterbildend wird vorgeschlagen, dass das unterirdische Tanklager 2 Mittel zur Druckentlastung aufweist.

Dadurch kann der im Falle einer Explosion oder des Bersten eines Speicherbehälters 1 sich innerhalb des unterirdischen Tanklagers 2 aufbauende Druck aus dem unterirdischen Tanklager 2 abgeführt und so das Ausmaß des Schadens verringert werden.

Das Befüllen des Speicherbehälters 1 mit flüssigem Wasserstoff 3 erfolgt über einen Versorgungsanschluss 25, der über Leitung 26 mit dem Speicherbehälter 1 verbunden ist. Da im Regelfall während des Befüllvorganges ein Boil-Off-Gas entsteht und aus dem Speicherbehälter 1 abgezogen werden muss, ist vorzugsweise eine Ab- bzw. Rückführleitung 27 vorzusehen.

Über Leitung 7 wird verflüssigter Wasserstoff 3 aus dem Speicherbehälter 1 abgezogen und einer sog. LH₂-Transferpumpe 8 zugeführt, die den verflüssigten Wasserstoff über Leitung 9 dem Ventil- und Steuerblock 10 zuführt Die LH₂₋Transferpumpe weist vorzugsweise eine Förderleistung zwischen 3000 und 6000 I/h auf.

Nach Durchgang durch den Ventil- und Steuerblock 10 wird der verflüssigte Wasserstoff über Leitung 11 der eigentlichen LH₂-Zapfsäule 12 zugeführt und kann über diese an das zu betankende Fahrzeug abgegeben werden. Da - abhängig von dem angewendeten Betankungsverfahren - während des Betankungsvorganges eine gasförmige Wasserstofffraktion anfällt, ist eine Abgasleitung 13 vorgesehen, über die diese gasförmige Wasserstofffraktion - bspw. an die Atmosphäre - abgegeben werden kann.

Femer ist gegebenenfalls - entsprechend einer weiteren Ausgestaltung der erfindungsgemäßen Tankstelle für Wasserstoff eine Rückgasleitung 14 vorgesehen, über die die vorgenannte, anfallende gasförmige Wasserstofffraktion der noch zu beschreibenden GH₂-Zapfsäule bzw. dem GH₂-Hochdruckspeicher zugeführt werden kann.

Über eine weitere Leitung 15 ist ebenfalls die Entnahme von verflüssigtem Wasserstoff 3 aus dem Speicherbehälter 1 möglich. Der verflüssigte Wasserstoff wird mittels der kryogenen Druckerhöhungspumpe 16 auf einen Druck zwischen 300 und 800 bar gepumpt und über Leitung 17 einem Wärmetauscher 18 zugeführt. In diesem wird der verflüssigte Wasserstoff - vorzugsweise gegen Umgebungsluft - angewärmt und verdampft und anschließend über eine Leitung einem Hochdruckspeicher 19, der der Speicherung des Wasserstoffes bei einem Druck zwischen 300 und 800 bar dient, zugeführt.

Wird nun ein Fahrzeug über die GH₂-Zapfsäule 24 mit gasförmigem Wasserstoff betankt, so gelangt dieser über die den Hochdruckspeicher 19 und die GH₂-Zapfsäule 24 verbindende Leitung 23 aus dem Hochdruckspeicher 19 zu dem zu betankenden Fahrzeug. Die Speicherkapazität des Hochdruckspeichers 19 is hierbei so auszulegen, dass auch zu Spitzenzeiten ein kontinuierliches Betanken von Fahrzeugen mit gasförmigem, unter hohem Druck stehenden Wasserstoff möglich ist.

Des Weiteren kann eine Leitung 20 vorgesehen werden, über die aus dem Gasraum 4 des Speicherbehälters 1 das zwangsläufig entstehende Boil-off-Gas abgezogen und einem Wärmetauscher 21, in dem es angewärmt wird, zugeführt wird. Das angewärmte Boil-Off-Gas wird anschließend mittels eines Boil-Off-Gas-Verdichters 22 ebenfalls auf den in dem Hochdruckspeicher 19 herrschenden Druck verdichtet und in diesen geleitet.

Die erfindungsgemäße Tankstelle für Wasserstoff ermöglicht die (gleichzeitige) Betankung von Fahrzeugen jeder Art mit einem verflüssigten und einem gasförmigen, unter hohem Druck stehenden Medium.

## Patentansprüche

1. Tankstelle für verflüssigten und gasförmigen, unter hohem Druck stehenden Wasserstoff, aufweisend
a) wenigstens einen unterirdisch angeordneten Speicherbehälter (1), der für die Speicherung von verflüssigtem Wasserstoff (3) geeignet ist,
b) wenigstens einen Hochdruck-Speicherbehälter (19), der für die Speicherung von gasförmigem Wasserstoff bei einem Druck zwischen 300 und 800 bar geeignet ist,
c) wenigstens eine erste Betankungseinrichtung (12), über die Fahrzeuge jeglicher Art mit flüssigem Wasserstoff betankt werden können, und wenigstens eine zweite Betankungseinrichtung (24), über die gleichzeitig Fahrzeuge jeglicher Art mit gasförmigem, unter hohem Druck stehenden Wasserstoff kontinuierlich betankt werden können,
d) wenigstens einen Wärmetauscher (18), der der Verdampfung des aus dem unterirdisch angeordneten Speicherbehälter (1) abgezogenen flüssigen Wasserstoffes (3) dient,
e) wenigstens eine Pumpe (8), mittels derer der flüssige Wasserstoff (3) aus dem unterirdisch angeordneten Speicherbehälter (1) der oder zumindest einer der ersten Betankungseinrichtungen (12) zugeführt wird,
f) wenigstens eine kryogene Druckerhöhungspumpe (16), mittels derer der flüssige Wasserstoff (3) aus dem unterirdisch angeordneten Speicherbehätter (1) dem Wärmetauscher (18) und anschließend dem Hochdruck-Speicherbehälter (19), der mit der oder zumindest einer der zweiten Betankungseinrichtungen (24) verbunden ist, zugeführt wird, und
g) eine, den unterirdisch angeodneten Speicherbehälter (1) mit dem Hochdruck-Speicherbehälter (19) und/oder mit der oder zumindest einer der zweiten Betankungseinrichtungen (24) verbindende Boil-Off-Gas-Entnahmeleitung (20), wobei in dieser wenigstens ein Verdichter (22) angeordnet ist.

2. Tankstelle nach Anspruch 1, **dadurch gekennzeichnet, dass** eine die ersten und zweiten Betankungseinrichtungen (12, 24) verbindende Leitung (14) vorgesehen ist.

3. Tankstelle nach Anspruch 1 oder 2, **dadurch gekennzeichnet, dass** der oder die unterirdisch angeordneten Speicherbehälter (1) in einem unterirdischen Tanklager (2), bestehend aus einer eine Abdeckung (5) aufweisenden Wanne (6), angeordnet sind.

4. Tankstelle nach Anspruch 3, **dadurch gekennzeichnet, dass** die Pumpe (8), mittels derer der flüssige Wasserstoff (3) aus dem unterirdisch angeordneten Speicherbehälter (1) zumindest einer der ersten oder zweiten Betankungseinrichtungen (12, 24) zugeführt wird, und/oder die kryogene Druckerhöhungspumpe (16) in dem unterirdischen Tanklager (2) angeordnet sind.

5. Tankstelle nach Anspruch 3 oder 4, **dadurch gekennzeichnet, dass** das unterirdische Tanklager (2) Mittel zur Druckentlastung aufweist.

6. Tankstelle nach einem der Ansprüche 1 bis 5, **dadurch gekennzeichnet, dass** die Pumpe (8), mittels derer flüssiger Wasserstoff (3) aus dem unterirdisch angeordneten Speicherbehälter (1) der ersten oder zumindest einer der ersten Betankungseinrichtungen (12), über die Fahrzeuge jeglicher Art mit flüssigem Wasserstoff betankt werden können, zugeführt wird, eine Förderleistung zwischen 3000 und 6000 l/h aufweist.

## Claims

1. Filling station for liquefied and gaseous, pressurized hydrogen, having
a) at least one storage tank (1) which is arranged underground and is suitable for storing liquefied hydrogen (3),
b) at least one high-pressure storage tank (19) which is suitable for storing gaseous hydrogen at a pressure of between 300 and 800 bar,
c) at least one first refuelling device (12), which can be used to refuel vehicles of any type with liquid hydrogen, and at least one second refuelling device (24), which can be used simultaneously to continuously refuel vehicles of any type with gaseous, pressurized hydrogen,
d) at least one heat exchanger (18), which is used to evaporate the liquid hydrogen (3) withdrawn from the storage tank (1) arranged underground,
e) at least one pump (8), which is used to feed the liquid hydrogen (3) from the storage tank (1) arranged underground to the or at least one of the first refuelling devices (12),
f) at least one cryogenic pressure-increasing pump (16), by means of which the liquid hydrogen (3) from the storage tank (1) arranged underground is fed to the heat exchanger (18) and then to the high-pressure storage tank (19), which is connected to the or at least one of the second refuelling devices (24), and
g) a boil-off gas removal line (20), which connects the storage tank (1) arranged underground to the high-pressure storage tank (19) and/or to the or at least one of the second refuelling devices (24), at least one compressor (22) being arranged in said removal line.

2. Filling station according to Claim 1, **characterized in that** there is a line (14) connecting the first and second refuelling devices (12, 24).

3. Filling station according to Claim 1 or 2, **characterized in that** the storage tank(s) (1) arranged underground is/are arranged in an underground tank holder (2) comprising a well (6) having a cover (5).

4. Filling station according to Claim 3, **characterized in that** the pump (8) which is used to feed the liquid hydrogen (3) from the storage tank (1) arranged underground to at least one of the first or second refuelling devices (12, 24) and/or the cryogenic pressure-increasing pump (16) are arranged in the underground tank holder (2).

5. Filling station according to Claim 3 or 4, **characterized in that** the underground tank holder (2) has pressure-relief means.

6. Filling station according to any of Claims 1 to 5, **characterized in that** the pump (8) which is used to feed liquid hydrogen (3) from the storage tank (1) arranged underground to the first or at least one of the first refuelling devices (12), by which vehicles of any type can be refuelled with liquid hydrogen, has a delivery capacity of between 3000 and 6000 1/h.

## Revendications

1. Poste de ravitaillement en hydrogène liquéfié et gazeux sous haute pression, présentant
a) au moins un réservoir de stockage (1) enterré, qui est approprié pour le stockage d'hydrogène liquéfié (3),
b) au moins un réservoir de stockage à haute pression (19) qui est approprié pour le stockage d'hydrogène gazeux à une pression comprise entre 300 et 800 bars,
c) au moins un premier dispositif d'alimentation (12) permettant d'alimenter en hydrogène liquide des véhicules de tout type, et au moins un deuxième dispositif d'alimentation (24) permettant simultanément d'alimenter en continu en hydrogène gazeux à haute pression des véhicules de tout type,
d) au moins un échangeur de chaleur (18) qui sert à l'évaporation de l'hydrogène liquide (3) soutiré du réservoir de stockage enterré (1),
e) au moins une pompe (8) au moyen de laquelle l'hydrogène liquide (3) est acheminé du réservoir de stockage enterré (1) au premier dispositif d'alimentation ou à au moins l'un des premiers dispositifs d'alimentation (12),
f) au moins une pompe cryogénique d'augmentation de la pression (16) au moyen de laquelle l'hydrogène liquide (3) peut être acheminé du réservoir de stockage enterré (1) à l'échangeur de chaleur (18) et ensuite au réservoir de stockage à haute pression (19), qui est connecté au deuxième dispositif d'alimentation ou à au moins l'un des deuxièmes dispositifs d'alimentation (24), et
g) une conduite de prélèvement des gaz d'évaporation (20) reliant le réservoir de stockage enterré (1) au réservoir de stockage à haute pression (19) et/ou au deuxième dispositif d'alimentation ou à au moins l'un des deuxièmes dispositifs d'alimentation (24), au moins un compresseur (22) étant disposé dans celle-ci.

2. Poste de ravitaillement selon la revendication 1, **caractérisé en ce qu'**une conduite (14) reliant les premiers et deuxièmes dispositifs d'alimentation (12, 24) est prévue.

3. Poste de ravitaillement selon la revendication 1 ou 2, **caractérisé en ce que** le ou les réservoirs de stockage enterrés (1) sont disposés dans un terminal de stockage enterré (2) constitué d'une cuve (6) présentant un recouvrement (5).

4. Poste de ravitaillement selon la revendication 3, **caractérisé en ce que** la pompe (8) au moyen de laquelle l'hydrogène liquide (3) est acheminé du réservoir de stockage enterré (1) à au moins l'un des premiers ou deuxièmes dispositifs d'alimentation (12, 24), et/ou la pompe cryogénique d'augmentation de la pression (16) sont disposées dans le terminal de stockage enterré (2).

5. Poste de ravitaillement selon la revendication 3 ou 4, **caractérisé en ce que** le terminal de stockage enterré (2) présente des moyens de détente de la pression.

6. Poste de ravitaillement selon l'une quelconque des revendications 1 à 5, **caractérisé en ce que** la pompe (8) au moyen de laquelle de l'hydrogène liquide (3) est acheminé du réservoir de stockage enterré (1) au premier ou à au moins l'un des premiers dispositifs d'alimentation (12), permettant d'alimenter en hydrogène liquide des véhicules de tout type, présente une puissance de refoulement comprise entre 3000 et 6000 1/h.
